# EUROPEAN PATENT APPLICATION

(11) **EP 4 641 276 A1**
(43) Date of publication of application: **29.10.2025**
(21) Application number: 23906369.6
(22) Date of filing: 28.08.2023
(51) Int. Cl.: G02B 6/44, G02B 6/02

(54) **OPTICAL FIBER RIBBON, CONNECTOR-EQUIPPED OPTICAL FIBER RIBBON, OPTICAL FIBER CABLE AND OPTICAL FIBER**

(30) Priority: 22.12.2022 JP 2022205304
(71) Applicant: FUJIKURA LTD., Tokyo 135-8512 (JP)
(72) Inventor: NISHIMURA, Akito, Sakura-shi, Chiba 285-8550 (JP)
(74) Representative: Plasseraud IP
(86) International application number: PCT/JP2023/030944
(87) International publication number: WO 2024/134992

(57) **Abstract**

An optical fiber ribbon includes an optical fiber that has a plurality of cores inside a cladding and that has a helical part in which positions of the plurality of cores in a longitudinal direction of the cladding helically change, a non-helical part in which the positions of the plurality of cores in the longitudinal direction do not helically change, and a coating layer that covers the cladding, and a fixing portion configured to fix the coating layers of a plurality of the optical fibers to each other such that the plurality of optical fibers are arranged in a direction intersecting the longitudinal direction, in which the coating layer has a coating region in which a coating portion that coats the cladding is provided, and a coating-removed region that is provided at a position corresponding to the non-helical part and from which the coating portion is removed, and a first resin that adheres and fixes the cladding and the coating portion to each other is provided in the coating-removed region.

## Description

### TECHNICAL FIELD

The present invention relates to an optical fiber ribbon, a connector-equipped optical fiber ribbon, an optical fiber cable, and an optical fiber.

Priority is claimed on Japanese Patent Application No. 2022-205304, filed December 22, 2022, the content of which is incorporated herein by reference.

### BACKGROUND ART

In the related art, development of a so-called multi-core fiber in which a plurality of cores are arranged inside one cladding has been active. When attaching a connector to a tip of the multi-core fiber, generally, rotational alignment work of adjusting a rotation angle (a position of each core in a circumferential direction) of the multi-core fiber with respect to the connector is performed. It is known that such rotational alignment work takes a lot of time.

Patent Document 1 discloses a technology of attaching a connector to a tip of a spun multicore fiber, which is a type of a multi-core fiber, after rotationally aligning the spun multicore fiber.

### Citation List

### Patent Document

Patent Document 1: Japanese Unexamined Patent Application, First Publication No. 2022-75219

### SUMMARY OF INVENTION

### Technical Problem

An optical fiber generally has a configuration in which a periphery of a cladding is covered with a coating portion such as resin. In a multi-core fiber having the coating portion, even in a case where the coating portion is fixed, a multi-core may rotate relative to the coating portion after the rotational alignment work, which may cause a rotation angle of the multi-core fiber to vary. In a case where the above-mentioned relative rotation occurs when attaching a connector to a tip of the multi-core fiber, it is necessary to rotationally align each multi-core fiber again. Therefore, work of attaching the connector may require a lot of effort.

The present invention has been made in consideration of such circumstances, and an object of the present invention is to provide an optical fiber ribbon, a connector-equipped optical fiber ribbon, an optical fiber cable, and an optical fiber, in which attachment of a connector is facilitated.

### Solution to Problem

In order to solve the above-described problem, an optical fiber ribbon according to a first aspect of the present invention includes an optical fiber that has a plurality of cores inside a cladding and that has a helical part in which positions of the plurality of cores in a longitudinal direction of the cladding helically change, a non-helical part in which the positions of the plurality of cores in the longitudinal direction do not helically change, and a coating layer that covers the cladding, and a fixing portion configured to fix the coating layers of a plurality of the optical fibers to each other such that the plurality of optical fibers are arranged in a direction intersecting the longitudinal direction, in which the coating layer has a coating region in which a coating portion that coats the cladding is provided, and a coating-removed region that is provided at a position corresponding to the non-helical part and from which the coating portion is removed, and a first resin that adheres and fixes the cladding and the coating portion to each other is provided in the coating-removed region.

In addition, according to a second aspect of the present invention, in the optical fiber ribbon according to the first aspect, the optical fiber has a plurality of the helical parts spaced apart in the longitudinal direction and a plurality of the non-helical parts located between the plurality of helical parts in the longitudinal direction.

In addition, according to a third aspect of the present invention, in the optical fiber ribbon according to the first or second aspect, the plurality of cores are rotationally aligned in the non-helical part.

In addition, according to a fourth aspect of the present invention, in the optical fiber ribbon according to any one of the first to third aspects, the first resin is provided over an entire of the coating-removed region.

In addition, according to a fifth aspect of the present invention, in the optical fiber ribbon according to any one of the first to third aspects, a second resin that is disposed at a position different from a position of the first resin in the longitudinal direction and that covers the cladding is provided in the coating-removed region, and a Young's modulus of the second resin is lower than a Young's modulus of the first resin.

In addition, a connector-equipped optical fiber ribbon according to a sixth aspect of the present invention includes the optical fiber ribbon according to any one of the first to fifth aspects, and a connector attached to a tip of the optical fiber ribbon, in which the first resin is provided at least at an end part that is farther from the connector, out of both end parts of the coating-removed region in the longitudinal direction.

In addition, an optical fiber cable according to a seventh aspect of the present invention includes a connector-equipped optical fiber ribbon including the optical fiber ribbon according to any one of the first to fifth aspects and a connector attached to a tip of the optical fiber ribbon.

In order to solve the above-described problem, an optical fiber according to an eighth aspect of the present invention includes a cladding, a multi-core that has a plurality of cores arranged inside the cladding and that has a helical part in which positions of the plurality of cores in a longitudinal direction of the cladding helically change and a non-helical part in which the positions of the plurality of cores in the longitudinal direction do not helically change, and a coating layer that covers the cladding, in which the coating layer is provided with an indication portion that indicates a position of the non-helical part.

### Advantageous Effects of Invention

According to the above aspects of the present invention, it is possible to provide an optical fiber ribbon, a connector-equipped optical fiber ribbon, an optical fiber cable, and an optical fiber, in which the relative rotation of the multi-core with respect to the coating portion after rotational alignment is suppressed and the attachment of the connector is facilitated.

### BRIEF DESCRIPTION OF DRAWINGS

[FIG. 1] A perspective view showing an optical fiber cable according to a first embodiment of the present invention.
[FIG. 2] A plan view showing a connector-equipped optical fiber ribbon according to the first embodiment of the present invention.
[FIG. 3] A cross-sectional view taken along a line III-III shown in FIG. 2.
[FIG. 4] A diagram showing a multi-core according to the first embodiment of the present invention.
[FIG. 5A] A diagram showing an example of a method of manufacturing an optical fiber ribbon according to the first embodiment of the present invention.
[FIG. 5B] A diagram showing a state subsequent to FIG. 5A.
[FIG. 5C] A diagram showing a state subsequent to FIG. 5B.
[FIG. 6A] A diagram showing an example of a method of replacing a connector in the connector-equipped optical fiber ribbon according to the first embodiment of the present invention.
[FIG. 6B] A diagram showing a state subsequent to FIG. 6A.
[FIG. 6C] A diagram showing a state subsequent to FIG. 6B.
[FIG. 7] A plan view showing an optical fiber ribbon according to a second embodiment of the present invention.

### DESCRIPTION OF EMBODIMENTS

### (First Embodiment)

Hereinafter, an optical fiber ribbon, a connector-equipped optical fiber ribbon, an optical fiber cable, and an optical fiber according to a first embodiment will be described with reference to the drawings.

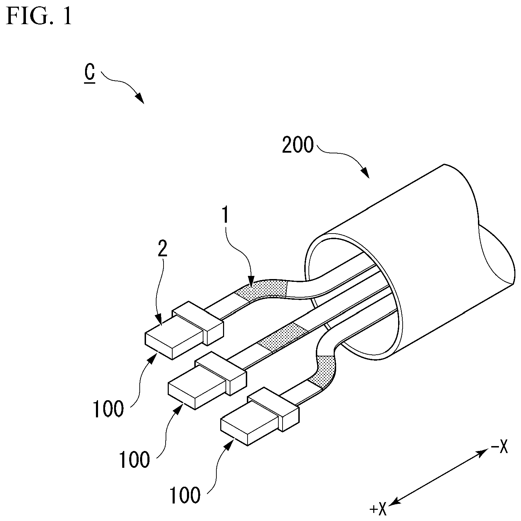

As shown in FIG. 1, an optical fiber cable C according to the present embodiment includes at least one connector-equipped optical fiber ribbon 100. The connector-equipped optical fiber ribbon 100 is housed in an outer cover 200 having a tubular shape. The outer cover 200 is formed of, for example, resin. The outer cover 200 protects the connector-equipped optical fiber ribbon 100. The number of the connector-equipped optical fiber ribbons 100 housed in the outer cover 200 can be changed as appropriate.

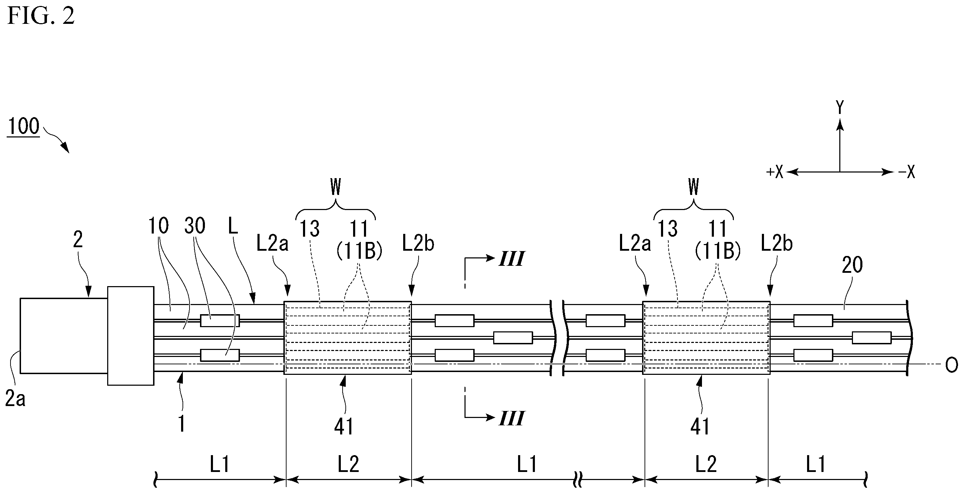

As shown in FIG. 2, each connector-equipped optical fiber ribbon 100 includes an optical fiber ribbon 1 and a connector (ferrule) 2 attached to a tip of the optical fiber ribbon 1. The connector 2 has a connection end surface 2a. The connection end surface 2a is a surface that abuts on another connector or the like when the connector 2 is connected to the other connector or the like.

The optical fiber ribbon 1 includes a plurality of spun multicore fibers (optical fibers) 10. In the optical fiber ribbon 1, the plurality of spun multicore fibers 10 are arranged in a direction intersecting (for example, orthogonal to) a longitudinal direction of the spun multicore fiber 10. As a result, the optical fiber ribbon 1 has a ribbon-like (tape-like) shape. The number of the spun multicore fibers 10 included in the optical fiber ribbon 1 can be changed as appropriate.

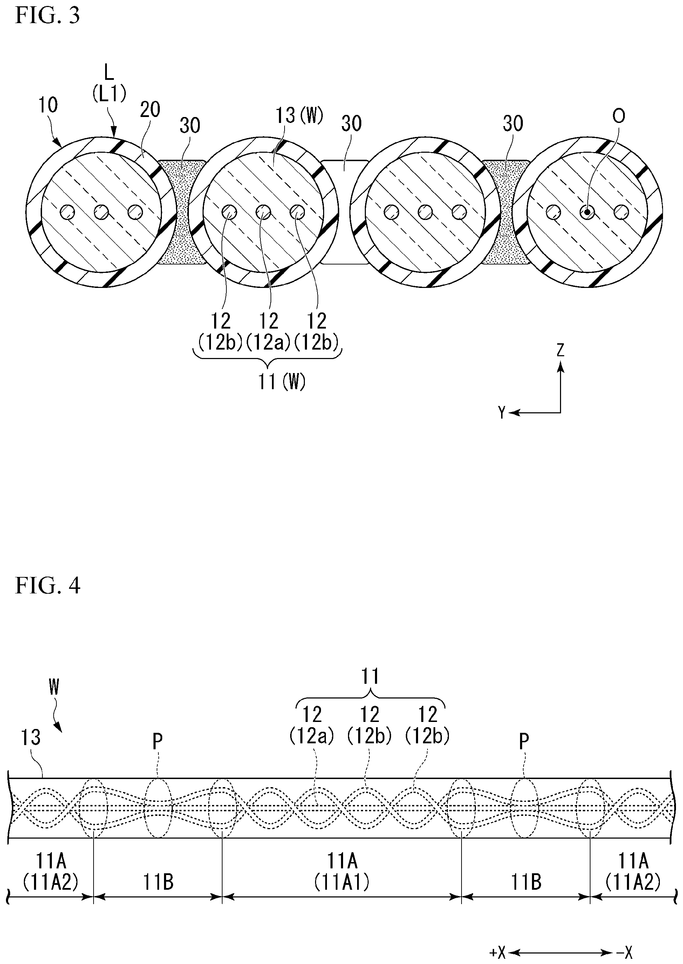

As shown in FIG. 3, the spun multicore fiber 10 has a multi-core 11, a cladding 13, and a coating layer L. The multi-core 11 has a plurality of cores 12. The cladding 13 covers the multi-core 11 (the plurality of cores 12). The core 12 and the cladding 13 are formed of, for example, silica glass. A refractive index of each core 12 is smaller than a refractive index of the cladding 13. As a result, the spun multicore fiber 10 can confine light inside the core 12. Hereinafter, the multi-core 11 (the plurality of cores 12) and the cladding 13 may be collectively referred to as a waveguide portion W.

The coating layer L covers the cladding 13 (the waveguide portion W). The coating layer L is provided with a coating portion 20 that coats the multi-core 11. The coating portion 20 is formed of, for example, a UV curable resin.

### (Definition of Direction)

In the present specification, the longitudinal direction of the spun multicore fiber 10 (the longitudinal direction of the cladding 13) is simply referred to as a longitudinal direction X. The longitudinal direction X is also a direction parallel to a central axis O (see also FIG. 3) of each spun multicore fiber 10. A direction that intersects (for example, is orthogonal to) the longitudinal direction X and in which the plurality of spun multicore fibers 10 are arranged is referred to as an intersection direction Y. A direction intersecting (for example, orthogonal to) both the longitudinal direction X and the intersection direction Y is referred to as a thickness direction Z. The thickness direction Z is also a thickness direction of the optical fiber ribbon 1. A direction from the optical fiber ribbon 1 to the connector 2 along the longitudinal direction X is referred to as a front side or a tip side and is represented by a +X direction. A direction opposite to the +X direction is referred to as a rear side or a proximal side and is represented by a - X direction. A cross section perpendicular to the longitudinal direction X is referred to as a transverse cross section. A view in the thickness direction Z is referred to as a plan view. In the transverse cross-sectional view of each spun multicore fiber 10, a direction orthogonal to the central axis O of the spun multicore fiber 10 is referred to as a radial direction. Along the radial direction, a direction closer to the central axis O is referred to as a radially inner side, and a direction separated from the central axis O is referred to as a radially outer side. In the transverse cross-sectional view of each spun multicore fiber 10, a direction that orbits around the central axis O is referred to as a circumferential direction.

As shown in FIG. 2, the plurality of spun multicore fibers 10 are fixed to each other by a plurality of fixing portions 30. The fixing portion 30 fixes the coating layers L to each other such that the plurality of spun multicore fibers 10 are arranged in the intersection direction Y. In the example shown in FIGS. 2 and 3, each fixing portion 30 fixes two spun multicore fibers 10 adjacent to each other in the intersection direction Y. In addition, the plurality of fixing portions 30 are intermittently disposed in the longitudinal direction X and in the intersection direction Y. As the fixing portion 30, for example, a UV curable resin may be used.

The configuration of the fixing portion 30 can be changed as appropriate as long as it is possible to fix the adjacent spun multicore fibers 10. For example, the plurality of spun multicore fibers 10 may be covered with a single fixing portion 30. Alternatively, for example, in a case where the spun multicore fibers 10 can be fixed to each other with sufficient strength by a resin 41 (described below), the optical fiber ribbon 1 does not need to have the fixing portion 30.

In the present embodiment, the plurality of cores 12 include one central core 12a and a plurality (two in the illustrated example) of non-central cores 12b. The central core 12a is a core 12 that extends linearly in the longitudinal direction X to include the central axis O of the spun multicore fiber 10 (see also FIG. 4). The non-central cores 12b are cores 12 other than the central core 12a.

As shown in FIG. 4, the multi-core 11 (spun multicore fiber 10) has a plurality of helical parts 11A and a plurality of non-helical parts 11B. The plurality of helical parts 11A are spaced apart in the longitudinal direction X. The plurality of non-helical parts 11B are located between the plurality of helical parts 11A in the longitudinal direction X. That is, the plurality of helical parts 11A and the plurality of non-helical parts 11B are alternately arranged in the longitudinal direction X. The multi-core 11 (spun multicore fiber 10) may have only one helical part 11A or may have only one non-helical part 11B.

In the helical part 11A, the plurality of cores 12 (non-central cores 12b) are helically wound. In other words, in the helical part 11A, the positions of the plurality of cores 12 (non-central cores 12b) in the longitudinal direction X helically change. The term "helical" specifically means a shape in which the position in the circumferential direction changes as the position in the longitudinal direction X changes. In the present embodiment, the plurality of helical parts 11A include a plurality of forward helical parts 11A1 and a plurality of reverse helical parts 11A2. The winding directions of the cores 12 are opposite to each other in the forward helical part 11A1 and the reverse helical part 11A2. In the present embodiment, each non-helical part 11B is disposed between the forward helical part 11A1 and the reverse helical part 11A2.

In the non-helical part 11B, the plurality of cores 12 are not helically wound. In other words, in the non-helical part 11B, the positions of the plurality of cores 12 in the longitudinal direction X do not helically change. That is, in the non-helical part 11B, the position of each core 12 in the circumferential direction is substantially constant over the longitudinal direction X. In the non-helical part 11B shown in FIG. 4, the position (the distance from the central axis O) of the core 12 in the radial direction changes over the longitudinal direction X. Note that the position of the core 12 in the radial direction may be substantially constant over the longitudinal direction X. In other words, in the non-helical part 11B, each core 12 may extend linearly in the longitudinal direction X. The term "substantially constant" also includes a case where the position can be considered constant if a manufacturing error is removed.

In the present embodiment, the plurality of cores 12 (multi-core 11) are rotationally aligned in each of the plurality of non-helical parts 11B. Here, the expression "the plurality of cores 12 (multi-core 11) are rotationally aligned" means that the position of each core 12 in the circumferential direction (the rotation angle of the multi-core 11 around the central axis O) is adjusted within a predetermined range. For example, in the non-helical part 11B, the positions of the plurality of cores 12 (non-central cores 12b) of the multi-core 11 in the circumferential direction are substantially the same between all the spun multicore fibers 10. The term "substantially the same" also includes a case where the positions can be considered the same if a manufacturing error is removed.

As shown in FIG. 2, the coating layer L according to the present embodiment has a plurality of coating regions L1 and a plurality of coating-removed regions L2. The coating region L1 is a region in which the coating portion 20 is provided. The coating-removed region L2 is a region in which the coating portion 20 is not provided. In other words, the coating-removed region L2 is a region from which the coating portion 20 is removed. The plurality of coating regions L1 and the plurality of coating-removed regions L2 are alternately arranged in the longitudinal direction X.

The coating-removed region L2 is provided at a position corresponding to the non-helical part 11B described above. Specifically, a range in which the coating-removed region L2 is present and a range in which the non-helical part 11B is present overlap each other in the longitudinal direction X. In other words, in a plan view, the coating-removed region L2 and the non-helical part 11B overlap each other. For example, the center of the coating-removed region L2 in the longitudinal direction X and the center of the non-helical part 11B in the longitudinal direction X may be at substantially the same position. Hereinafter, an end part that is closer to the connector 2, out of both end parts of the coating-removed region L2 in the longitudinal direction X, is referred to as a front end part L2a, and an end part that is farther from the connector 2 is referred to as a rear end part L2b.

As shown in FIG. 2, a resin (first resin) 41 is provided in the coating-removed region L2. In the present embodiment, the resin 41 is provided from the front end part L2a to the rear end part L2b of the coating-removed region L2. That is, the resin 41 according to the present embodiment is provided over the entire coating-removed region L2. In addition, the resin 41 adheres and fixes the cladding 13 (waveguide portion W) and the coating portion 20 to each other. From the viewpoint of sufficiently increasing the fixing strength between the waveguide portion W and the coating portion 20, it is preferable that the Young's modulus of the resin 41 is high to some extent. The Young's modulus of the resin 41 is, for example, preferably 500 MPa or more. In addition, in order to reliably adhere and fix the cladding 13 and the coating portion 20 to each other using the resin 41, a region of the resin 41 may be expanded to include a part of the coating region L1 in addition to the entire of the coating-removed region L2.

Next, an example of a method of manufacturing the optical fiber ribbon 1 configured as described above will be described.

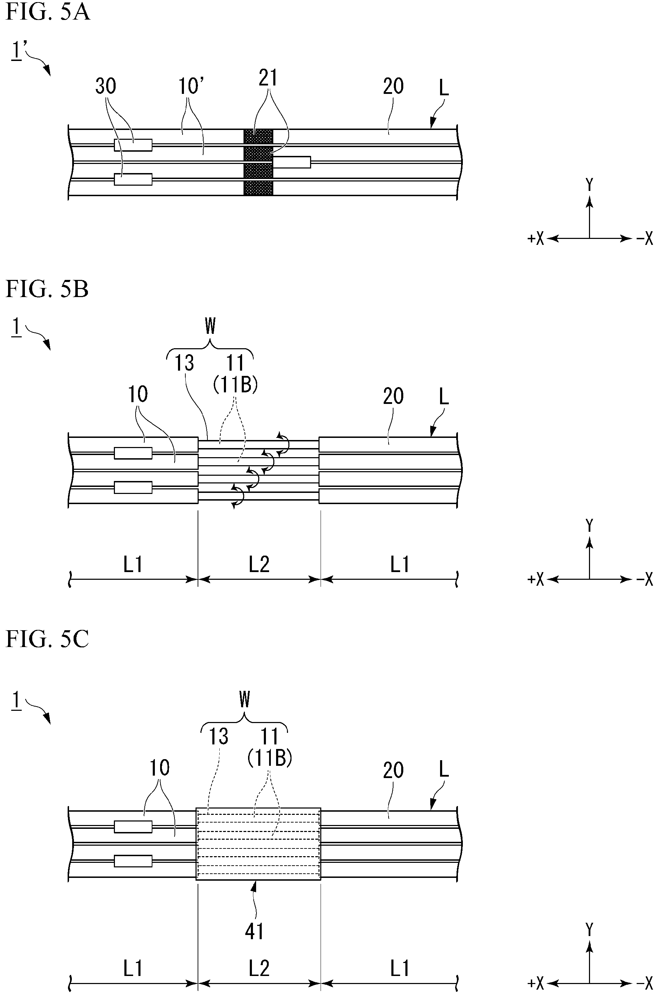

As shown in FIG. 5A, when manufacturing the optical fiber ribbon 1 according to the present embodiment, first, an optical fiber ribbon 1' including a plurality of spun multicore fibers 10' is prepared. In this case, the optical fiber ribbon 1' is not provided with the coating-removed region L2 described above. That is, the cladding 13 is coated with the coating portion 20 over the entire length in the longitudinal direction X. In other words, the coating region L1 is provided over the entire cladding 13 (coating layer L) in the longitudinal direction X.

The coating portion 20 (coating layer L) of the spun multicore fiber 10' is provided with an indication portion 21 indicating the position of the non-helical part 11B. In the present embodiment, the indication portion 21 is a mark provided on the coating portion 20. The position of the indication portion 21 corresponds to the position of the non-helical part 11B. Specifically, a range in which the indication portion 21 is present and a range in which the non-helical part 11B is present overlap each other in the longitudinal direction X. In other words, in a plan view, the indication portion 21 and the non-helical part 11B overlap each other. For example, the center of the indication portion 21 in the longitudinal direction X and the center of the non-helical part 11B in the longitudinal direction X may be at substantially the same position. Alternatively, the indication portion 21 may be provided at a position (position P shown in FIG. 4) where the cores 12 are closest to each other in the non-helical part 11B.

Next, the coating portion 20 is removed in the vicinity of the indication portion 21 (see FIG. 5B). In this step, a portion from which the coating portion 20 is removed is the coating-removed region L2 described above. Here, since the position of the indication portion 21 and the position of the non-helical part 11B correspond to each other, the position of the coating-removed region L2 corresponds to the position of the non-helical part 11B as described above.

Next, in the coating-removed region L2, the non-helical part 11B is rotationally aligned. Specifically, in the coating-removed region L2, the waveguide portion W is held and rotated around the central axis O of the spun multicore fiber 10. As a result, the waveguide portion W rotates relative to the coating portion 20 in the coating-removed region L2 and the vicinity thereof. When rotationally aligning the non-helical part 11B, for example, the position of each core 12 may be checked by irradiating the non-helical part 11B with light from the side.

After the rotational alignment, the coating-removed region L2 is filled with the resin 41 (see FIG. 5C). The waveguide portion W is fixed to the coating portion 20 in a state where the non-helical part 11B is rotationally aligned by the adhesion force of the resin 41. As a result, the manufacturing of the optical fiber ribbon 1 is completed. When manufacturing (assembling) the connector-equipped optical fiber ribbon 100, for example, the optical fiber ribbon 1 is cut in the coating-removed region L2. Then, the resin 41 is removed to expose the waveguide portion W, and the exposed waveguide portion W is inserted into the connector 2. As a result, the connector-equipped optical fiber ribbon 100 is manufactured in which the multi-core 11 is rotationally aligned at the connection end surface 2a. A tip of the waveguide portion W may be polished as necessary.

Next, the action of the optical fiber ribbon 1 configured as described above will be described.

In the related art, development of a so-called multi-core fiber in which a plurality of cores are arranged inside one cladding has been active. When a connector is attached to a tip of the multi-core fiber, the multi-core fiber is generally rotationally aligned. However, in the multi-core fiber having a configuration in which the cladding is covered with the coating portion, even in a case where the coating portion is fixed, a multi-core may rotate relative to the coating portion after the rotational alignment work, which may cause a rotation angle of the multi-core fiber to vary.

In order to solve this problem, the optical fiber ribbon 1 according to the present embodiment has the coating-removed region L2 from which the coating portion 20 is removed. The resin 41 that adheres and fixes the cladding 13 and the coating portion 20 to each other is provided in the coating-removed region L2. The adhesion force of the resin 41 suppresses the relative rotation of the waveguide portion W (multi-core 11) with respect to the coating portion 20.

In the present embodiment, the plurality of spun multicore fibers 10 are fixed in a tape shape by the fixing portion 30 and the resin 41 in a state where the non-helical part 11B is rotationally aligned. As a result, it is possible to easily manufacture the connector-equipped optical fiber ribbon 100 in which the multi-core 11 is rotationally aligned at the connection end surface 2a. In addition, the connector 2 can be easily replaced, for example, by a method described below.

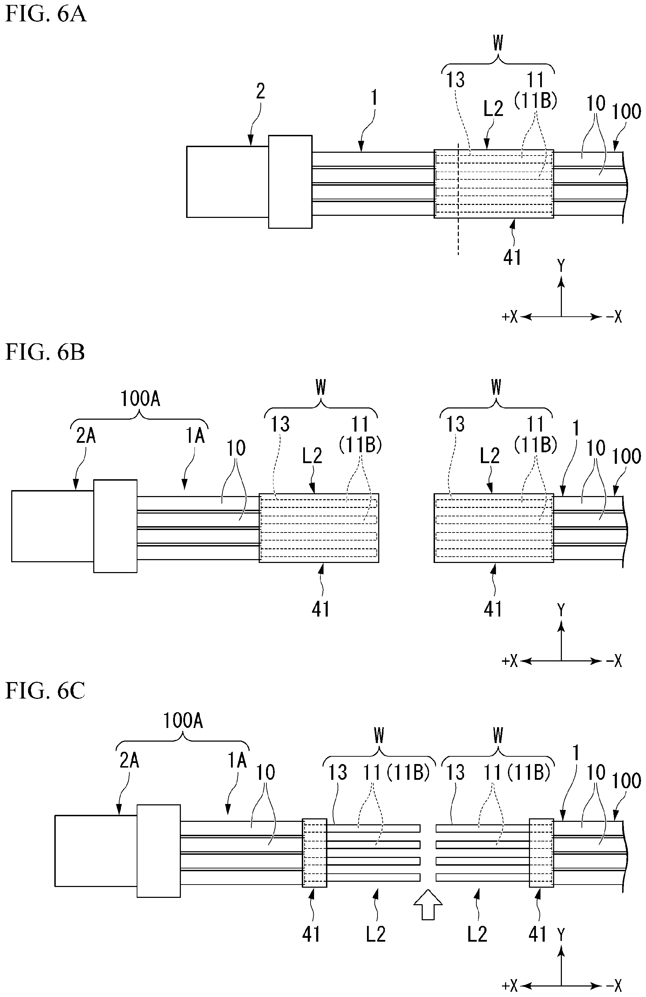

As shown in FIG. 6A, when replacing the connector 2, first, the optical fiber ribbon 1 is cut in the coating-removed region L2. In this case, it is preferable that the Young's modulus of the resin 41 is low to some extent so that the optical fiber ribbon 1 can be easily cut. The Young's modulus of the resin 41 is, for example, preferably 1000 MPa or less. That is, in addition to the above-described conditions regarding the adhesion fixing force, the Young's modulus of the resin 41 according to the present embodiment is, for example, preferably in a range of 500 MPa or more and 1000 MPa or less. In the illustrated example, the optical fiber ribbon 1 is cut in the coating-removed region L2 that is closest to the connector 2 out of the plurality of coating-removed regions L2 (see also FIG. 2), but the optical fiber ribbon 1 may be cut in another coating-removed region L2.

In addition, when replacing the connector 2, a replacement part 100A as shown in FIG. 6B is prepared. The replacement part 100A includes a replacement connector 2A and a replacement optical fiber ribbon 1A. The configuration of the replacement connector 2A may be the same as the configuration of the connector 2. The coating-removed region L2 is provided at a rear end part of the replacement optical fiber ribbon 1A. Similar to the optical fiber ribbon 1, the resin 41 and the non-helical part 11B that has been rotationally aligned in advance are provided in the coating-removed region L2.

Then, as shown in FIG. 6C, the resin 41 is removed in both the coating-removed region L2 of the optical fiber ribbon 1 and the coating-removed region L2 of the replacement optical fiber ribbon 1A. As a result, a front end part of the waveguide portion W of the optical fiber ribbon 1 and a rear end part of the waveguide portion W of the replacement optical fiber ribbon 1A are exposed. Then, the front ends of the plurality of waveguide portions W of the optical fiber ribbon 1 and the rear ends of the plurality of waveguide portions W of the replacement optical fiber ribbon 1A are fusion-spliced, thereby connecting the optical fiber ribbon 1 and the replacement part 100A. In this case, since the non-helical part 11B is rotationally aligned in advance in the coating-removed region L2 and the spun multicore fibers 10 are fixed in a tape shape, the plurality of waveguide portions W can be easily connected all at once. When carrying out the fusion splice, the end part of the waveguide portion W may be polished, as necessary. Finally, the replacement work of the connector 2 is completed by filling the coating-removed region L2 with the resin 41 again.

As described above, the optical fiber ribbon 1 according to the present embodiment includes the spun multicore fiber (optical fiber) 10 that has the plurality of cores 12 inside the cladding 13 and that has the helical part 11A in which the positions of the plurality of cores 12 in the longitudinal direction X of the cladding 13 helically change, the non-helical part 11B in which the positions of the plurality of cores 12 in the longitudinal direction X do not helically change, and the coating layer L that covers the cladding 13, and the fixing portion 30 configured to fix the coating layers L of the plurality of spun multicore fibers 10 to each other such that the plurality of spun multicore fibers 10 are arranged in the direction (intersection direction Y) intersecting the longitudinal direction X, in which the coating layer L has the coating region L1 in which the coating portion 20 that coats the cladding 13 is provided, and the coating-removed region L2 that is provided at a position corresponding to the non-helical part 11B and from which the coating portion 20 is removed, and the resin 41 (first resin) that adheres and fixes the cladding 13 and the coating portion 20 to each other is provided in the coating-removed region L2.

With this configuration, the adhesion force of the resin 41 suppresses the relative rotation of the cladding 13 and the multi-core 11 with respect to the coating portion 20. In addition, since the plurality of spun multicore fibers 10 are fixed in a tape shape by the fixing portion 30 and the resin 41, the connector 2 can be easily attached to the optical fiber ribbon 1.

In addition, the spun multicore fiber 10 has the plurality of helical parts 11A spaced apart in the longitudinal direction X and the plurality of non-helical parts 11B located between the plurality of helical parts 11A in the longitudinal direction X. With this configuration, a worker can randomly select a location where the connector 2 is attached from the plurality of non-helical parts 11B.

In addition, the plurality of cores 12 (multi-core 11) are rotationally aligned in the non-helical part 11B. In a case where the rotational alignment is performed in the helical part 11A instead of the non-helical part 11B and the connector 2 is attached to the helical part 11A, the position of the core 12 exposed at the tip of the waveguide portion W changes in the circumferential direction depending on the degree of polishing applied to the waveguide portion W. By performing the rotational alignment in the non-helical part 11B instead of the helical part 11A, it is possible to suppress the misalignment of the core 12 in the circumferential direction regardless of the degree of polishing applied to the waveguide portion W. As a result, the connector 2 can be more easily attached to the optical fiber ribbon 1.

In addition, the resin 41 is provided over the entire of the coating-removed region L2. With this configuration, the cladding 13 (waveguide portion W) and the coating portion 20 can be more firmly fixed to each other as compared, for example, with a case where the resin 41 is provided only at the end parts L2a and L2b of the coating-removed region L2. In addition, the cladding 13 (waveguide portion W) can be protected by the resin 41.

In addition, the optical fiber cable C according to the present embodiment includes the connector-equipped optical fiber ribbon 100 including the optical fiber ribbon 1 described above and the connector 2 attached to the tip of the optical fiber ribbon 1. With this configuration, the relative rotation of the multi-core 11 with respect to the coating portion 20 is suppressed in each optical fiber ribbon 1, and the optical fiber cable C to which the connector 2 can be easily attached can be realized.

In addition, the spun multicore fiber 10' according to the present embodiment includes the cladding 13, the multi-core 11 that has the plurality of cores 12 arranged inside the cladding 13 and that has the helical part 11A in which the positions of the plurality of cores 12 in the longitudinal direction X of the cladding 13 helically change and the non-helical part 11B in which the positions of the plurality of cores 12 in the longitudinal direction X do not helically change, and the coating portion 20 (coating layer L) that covers the cladding 13, in which the coating portion 20 (coating layer L) is provided with the indication portion 21 that indicates the position of the non-helical part 11B.

With the spun multicore fiber 10', the optical fiber ribbon 1, the connector-equipped optical fiber ribbon 100, and the optical fiber cable C can be easily manufactured.

### (Second Embodiment)

Next, a second embodiment will be described, but basic configurations thereof are the same as the configurations of the first embodiment. Therefore, the same configurations will be denoted by the same reference numerals, descriptions thereof will be omitted, and only different points will be described.

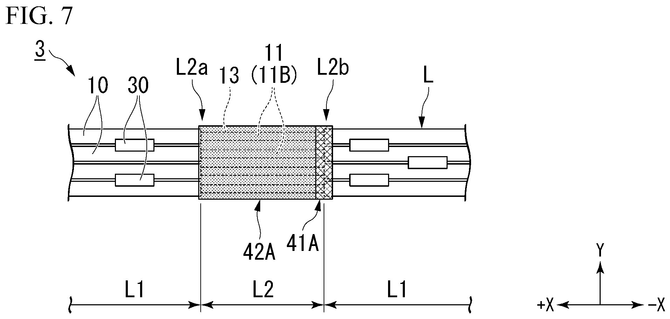

As shown in FIG. 7, in an optical fiber ribbon 3 according to the present embodiment, two types of resins 41A and 42A are provided in the coating-removed region L2. The resins 41A and 42A cover the cladding 13. The first resin 41A is provided at least at the rear end part L2b of the coating-removed region L2. The second resin 42A is disposed at a position different from a position of the first resin 41A in the longitudinal direction X. In the present embodiment, the second resin 42A is provided over the entire portion of the coating-removed region L2 other than the portion (rear end part L2b) where the first resin 41A is provided. The Young's modulus of the second resin 42A is lower than the Young's modulus of the first resin 41A.

The first resin 41A adheres and fixes the cladding 13 (waveguide portion W) and the coating portion 20 to each other, as with the resin 41 in the first embodiment. From the viewpoint of the fixing strength, it is preferable that the Young's modulus of the first resin 41A is high to some extent, as with the resin 41 in the first embodiment. The Young's modulus of the first resin 41A is, for example, preferably 500 MPa or more.

On the other hand, in the present embodiment, the second resin 42A having a lower Young's modulus than the first resin 41A is provided in the coating-removed region L2. Therefore, even in a case where the Young's modulus of the first resin 41A is extremely high, the optical fiber ribbon 3 can be cut in the portion where the second resin 42A is provided. Therefore, the Young's modulus of the first resin 41A in the present embodiment may be, for example, 1000 MPa or more. It is preferable that the Young's modulus of the second resin 42A is low to some extent. The Young's modulus of the second resin 42A is, for example, preferably 10 MPa or more and 100 MPa or less.

As described above, in the optical fiber ribbon 3 according to the present embodiment, the second resin 42A that is disposed at a position different from a position of the first resin 41A in the longitudinal direction X and that covers the cladding 13 is provided in the coating-removed region L2, and the Young's modulus of the second resin 42A is lower than the Young's modulus of the first resin 41A. With this configuration, it is possible to reduce the force required for cutting the optical fiber ribbon 3 while ensuring the fixing strength between the cladding 13 and the coating portion 20.

In addition, the first resin 41A is provided at least at an end part (rear end part L2b) that is farther from the connector 2, out of both end parts of the coating-removed region L2 in the longitudinal direction X. With this configuration, for example, even after the optical fiber ribbon 3 is cut as shown in FIG. 6A, the waveguide portion W (cladding 13) can remain adhered and fixed to the coating portion 20 by the first resin 41A.

Note that, the technical scope of the present invention is not limited to the above-described embodiments, and various modifications can be made without departing from the spirit of the present invention.

For example, in the embodiments, it has been described that the plurality of cores 12 (multi-core 11) are rotationally aligned in each of the plurality of non-helical parts 11B, but a non-helical part 11B in which the plurality of cores 12 are not rotationally aligned may be present. When the plurality of cores 12 are rotationally aligned in at least one non-helical part 11B and the coating-removed region L2 is provided at a position corresponding to the non-helical part 11B, the same effects as those of the above-described embodiments can be realized.

In addition, in the embodiments, any of the resins 41, 41A, and 42A is provided over the entire coating-removed region L2, but the resins 41, 41A, and 42A may not be provided in a part of the coating-removed region L2, and the cladding 13 (waveguide portion W) may be exposed. Even in this case, as the resin 41 or 41A that adheres and fixes the cladding 13 (waveguide portion W) and the coating portion 20 to each other is provided in the coating-removed region L2, the relative rotation of the multi-core 11 (waveguide portion W) can be suppressed. In this case, it is preferable that the resin 41 or 41A is provided at least at the rear end part L2b of the coating-removed region L2. This is because the waveguide portion W (cladding 13) can remain adhered and fixed to the coating portion 20 by the resin 41 or 41A even after the optical fiber ribbon 1 or 3 is cut as shown in FIG. 6A.

In addition, it is possible to appropriately replace the constituent elements in the above-described embodiments with well-known constituent elements, and the above-described embodiments and modification examples may be combined as appropriate without departing from the spirit of the present invention.

### REFERENCE SIGNS LIST

C Optical fiber cable
100 Connector-equipped optical fiber ribbon
1, 3 Optical fiber ribbon
2 Connector
10, 10' Spun multicore fiber (optical fiber)
11 Multi-core
11A Helical part
11B Non-helical part
12 Core
13 Cladding
20 Coating portion
21 Indication portion
41, 41A First resin
42A Second resin
L Coating layer
L1 Coating region
L2 Coating-removed region
L2a Front end part
L2b Rear end part
X Longitudinal direction
Y Intersection direction

## Claims

1. An optical fiber ribbon comprising:
an optical fiber that has a plurality of cores inside a cladding and that has a helical part in which positions of the plurality of cores in a longitudinal direction of the cladding helically change, a non-helical part in which the positions of the plurality of cores in the longitudinal direction do not helically change, and a coating layer that covers the cladding; and
a fixing portion configured to fix the coating layers of a plurality of the optical fibers to each other such that the plurality of optical fibers are arranged in a direction intersecting the longitudinal direction,
wherein the coating layer has a coating region in which a coating portion that coats the cladding is provided, and a coating-removed region that is provided at a position corresponding to the non-helical part and from which the coating portion is removed, and
a first resin that adheres and fixes the cladding and the coating portion to each other is provided in the coating-removed region.

2. The optical fiber ribbon according to Claim 1,
wherein the optical fiber has a plurality of the helical parts spaced apart in the longitudinal direction and a plurality of the non-helical parts located between the plurality of helical parts in the longitudinal direction.

3. The optical fiber ribbon according to Claim 1 or 2,
wherein the plurality of cores are rotationally aligned in the non-helical part.

4. The optical fiber ribbon according to any one of Claims 1 to 3,
wherein the first resin is provided over an entire of the coating-removed region.

5. The optical fiber ribbon according to any one of Claims 1 to 3,
wherein a second resin that is disposed at a position different from a position of the first resin in the longitudinal direction and that covers the cladding is provided in the coating-removed region, and
a Young's modulus of the second resin is lower than a Young's modulus of the first resin.

6. A connector-equipped optical fiber ribbon comprising:
the optical fiber ribbon according to any one of Claims 1 to 5; and
a connector attached to a tip of the optical fiber ribbon,
wherein the first resin is provided at least at an end part that is farther from the connector, out of both end parts of the coating-removed region in the longitudinal direction.

7. An optical fiber cable comprising
a connector-equipped optical fiber ribbon including the optical fiber ribbon according to any one of Claims 1 to 5 and a connector attached to a tip of the optical fiber ribbon.

8. An optical fiber comprising:
a cladding;
a multi-core that has a plurality of cores arranged inside the cladding and that has a helical part in which positions of the plurality of cores in a longitudinal direction of the cladding helically change and a non-helical part in which the positions of the plurality of cores in the longitudinal direction do not helically change; and
a coating layer that covers the cladding,
wherein the coating layer is provided with an indication portion that indicates a position of the non-helical part.
